# EUROPEAN PATENT SPECIFICATION

(11) **EP 3 926 028 B1**
(45) Date of publication and mention of the grant of the patent: **22.10.2025**
(21) Application number: 20756156.4
(22) Date of filing: 17.01.2020
(51) Int. Cl.: C10N 20/02, C10N 30/00, C10N 40/30, C10M 107/24, F25B 1/00, C09K 5/04, C10M 171/00, C10N 20/00, C10N 30/02

(54) **COMPOSITION FOR REFRIGERATING MACHINES**
ZUSAMMENSETZUNG FÜR KÄLTEMASCHINEN
COMPOSITION POUR MACHINES FRIGORIFIQUES

(30) Priority: 14.02.2019 JP 2019024848
(43) Date of publication of application: 22.12.2021
(73) Proprietor: Idemitsu Kosan Co., Ltd., Chiyoda-ku Tokyo 100-8321 (JP)
(72) Inventor: MATSUMOTO, Tomoya, Ichihara-shi, Chiba 299-0107 (JP)
(74) Representative: Hoffmann Eitle
(86) International application number: PCT/JP2020/001421
(87) International publication number: WO 2020/166272

(56) References cited:
- EP-A1- 2 772 526
- EP-A1- 2 832 833
- EP-A1- 3 360 950
- EP-A1- 3 666 861
- WO-A1-2008/117657
- WO-A1-2013/062058
- WO-A1-2013/147048
- WO-A1-2018/212204
- WO-A1-2018/230515
- JP-A- 2010 002 074
- JP-A- 2010 047 754
- JP-A- 2012 505 279
- JP-A- 2017 071 690
- JP-A- 2018 177 953
- JP-B2- S5 626 335

## Description

### Technical Field

The present invention relates to a composition for refrigerator containing a mixed refrigerant and a refrigerator oil.

### Background Art

In general, a refrigerator, for example, a compression-type refrigerator, has such a structure in which not only it is configured of at least a compressor, a condenser, an expansion mechanism (such as an expansion valve), an evaporator, and so on, but also a mixture of a refrigerant and a refrigerator oil (hereinafter also referred to as "composition for refrigerator") is circulated within a closed system.

As the refrigerant which is used for compression-type refrigerators, fluorinated hydrocarbon compounds with a low environmental load have been being used in place of conventionally frequently used hydrochlorofluorocarbon (HCFC). As the fluorinated hydrocarbon compounds, a saturated fluorinated hydrocarbon compound (Hydro-Fluoro-Carbon; hereinafter also referred to as "HFC"), such as 1,1,1,2-tetrafluoroethane (R134a), difluoromethane (R32), and a mixture of difluoromethane and pentafluoroethane (R410A), is frequently used.

In addition, use of an unsaturated fluorinated hydrocarbon compound (Hydro-Fluoro-Olefin; hereinafter also referred to as "HFO") having a low global warming potential, such as 1,3,3,3-tetrafluoropropene (R1234ze) and 2,3,3,3-tetrafluoropropene (R1234yf), is also investigated.

Like this, in view of the fact that a refrigerant having a lower global warming potential is demanded, in particular, practical implementation of a refrigerant including the aforementioned HFO is investigated recently.

For example, PTL 1 discloses a working fluid composition for refrigerators, containing a polyvinyl ether having a specified structure and a fluoropropene refrigerant.

EP2832833A1 describes a working fluid composition for a refrigerating machine comprising a mixed refrigerant comprising a hydrofluoroethane represented by the C₂HₙF₆₋ₙ, difluoromethane and tetrafluoropropene, and a refrigerating machine oil comprising at least one selected from a polyol ester, a polyvinyl ether and a polyalkylene glycol compound as a base oil.

EP2772526A comprises a working fluid composition for a refrigerating machine comprising a refrigerant comprising difluoromethane and an unsaturated fluorinated hydrocarbon wherein a mass of the difluoromethane/the unsaturated fluorinated hydrocarbon is 95/5 to 10/90, and a refrigerating machine oil comprising at least one base oil selected from among polyol esters with a carbon/oxygen molar ratio of 3.2 to 5.8 and polyvinyl ethers with a carbon/oxygen molar ratio of 3.2 to 5.8.

EP3360950A1 describes a refrigerator oil containing at least one compound selected from the group consisting of a polyvinyl ether compound, a polyoxyalkylene glycol compound, and a polyol ester compound.

EP3666861A1 describes a refrigerator oil composition containing an epoxy compound having at least one of an olefin skeleton and a terpene skeleton, and a base oil.

### Citation List

### Patent Literature

PTL 1: JP 2009-126979 A

### Summary of Invention

### Technical Problem

As mentioned above, the composition for refrigerator is, for example, used in a compression-type refrigerator having the aforementioned structure; however, the properties of the composition for refrigerator influence a life and refrigeration efficiency of the compression-type refrigerator.

For example, in the composition for refrigerator, in the case where the dissolution properties of the refrigerant relative to the refrigerator oil are not sufficient, the effects of the refrigerant cannot be sufficiently utilized, and the refrigeration efficiency of the refrigerator is lowered. On the other hand, in the case where the dissolution properties of the refrigerant relative to the refrigerator oil are excessively high, the dissolution viscosity of the composition for a refrigerator is decreased, and the lubricity of the composition for refrigerator is lowered, and therefore, wear of a lubricating member progresses, resulting in possibility of a reduction of the life of the compression-type refrigerator. In addition, on the occasion of using the foregoing composition for refrigerator, the refrigerant is hardly vaporized, so that an effect corresponding to the use amount of the refrigerant is not obtained.

In addition, for example, as mentioned above, the composition for refrigerator is required to have favorable lubricity. Depending upon the kind of an apparatus to be used, in order to obtain favorable lubricity as the composition for refrigerator, it is considered that the composition for refrigerator is required to have an appropriate dissolution viscosity. In the case where the dissolution viscosity is too low, an oil film becomes thin at the time of using the composition for refrigerator, so that the wear resistance is lowered, namely, the lubricity is lowered, leading to possibility in a decrease of life of the compression-type refrigerator. On the other hand, in the case where the dissolution viscosity is too high, the viscous resistance increases, and for example, a load to be applied at the time of sliding of a sliding member which is lubricated with the composition for refrigerator increases, resulting in possibility of an increase of the energy consumption of the apparatus.

From such a viewpoint, the composition for refrigerator is required such that the dissolution properties of a refrigerant to be used relative to a refrigerator oil (hereinafter also referred to as "refrigerant dissolution properties") are appropriate (hereinafter also referred to as "the refrigerant dissolution properties are favorable" or "favorable refrigerant dissolution properties"); and an appropriate solubility viscosity is exhibited (hereinafter also referred to as "the dissolution viscosity is favorable" or "favorable dissolution viscosity").

Here, as mentioned above, practical implementation of a mixed refrigerant having HFO and HFC mixed therein as a refrigerant containing HFO is investigated recently, and actually, some mixed refrigerants have become used. But, in the case of using a composition for refrigerator including such a mixed refrigerant, it has been confirmed that the refrigerant dissolution properties and the dissolution viscosity are changed due to the composition of the mixed refrigerant and the refrigerator oil to be used.

In consequence, the composition for refrigerator using a mixed refrigerant having HFO and HFC mixed therein is required such that both favorable refrigerant dissolution properties and favorable dissoluble viscosity are made compatible with each other.

In view of the foregoing problem, the present invention has been made, and an object thereof is to provide a composition for refrigerator using a mixed refrigerant, in which not only the refrigerant dissolution properties are favorable, but also a favorable dissolution viscosity is exhibited.

### Summary of Invention

### Solution to Problem

The present inventor and others made extensive and intensive investigations, and as a result, it has been found that a composition for refrigerator including a mixed refrigerant satisfying a specified composition and a refrigerator oil containing a base oil (P) including a polyvinyl ether (PVE) is able to solve the aforementioned problem. The present invention has been accomplished on the basis of such findings. A composition for refrigerator according to the present invention is as defined in the claims.
Further disclosed herein is a method of producing the composition for refrigerator, including a step of mixing a refrigerator oil containing a base oil (P) including a polyvinyl ether (PVE); and a mixed refrigerant including an unsaturated fluorinated hydrocarbon compound (HFO) in an amount 52% by mass or more and 66% by mass or less on a basis of the whole amount of the mixed refrigerant and a saturated fluorinated hydrocarbon compound (HFC).
Further disclosed is a refrigerator having the composition for refrigerator.
Further disclosed is an air conditioner having the composition for refrigerator.
Further disclosed is a use method of a composition for refrigerator, including filling the composition for refrigerator in a refrigerator or an air conditioner and using it.

### Advantageous Effects of Invention

In accordance with the present invention, it is possible to provide a composition for refrigerator using a mixed refrigerant, in which not only the refrigerant dissolution properties are favorable, but also a favorable dissolution viscosity is exhibited.

### Description of Embodiments

### [Composition for Refrigerator]

The composition for refrigerator according to the present invention is a composition for refrigerator including a mixed refrigerant and a refrigerator oil containing a base oil (P), wherein the mixed refrigerant includes an unsaturated fluorinated hydrocarbon compound (HFO) in an amount of 52% by mass or more and 66% by mass or less on a basis of the whole amount of the mixed refrigerant and a saturated fluorinated hydrocarbon compound (HFC); and the base oil (P) includes a polyvinyl ether (hereinafter also referred to as "PVE"), as further defined in the claims.

In this specification, a term "dissolution viscosity" refers to a dissolution viscosity of the composition for refrigerator under a condition at 60°C and 1.5 MPaG, and the value of the dissolution viscosity means a value measured by a method the same as the method described in the section of Examples as mentioned later.

In this specification, a term "hydrocarbon group" means a group constituted of only a carbon atom and a hydrogen atom. In the "hydrocarbon group", there are included an "aliphatic group" constituted of a linear chain or a branched chain, an "alicyclic group" having one or more saturated or unsaturated carbon rings with no aromaticity, and an "aromatic group" having one or more aromatic rings with aromaticity, such as a benzene ring.

In this specification, a term "ring carbon atoms" indicates a number of carbon atoms among atoms constituting a ring itself of a compound having a structure in which the atoms are bonded in a ring form. In the case where the foregoing ring is substituted with a substituent, the carbon(s) included in the substituent is not included in the ring carbon atoms.

A term "ring atoms" indicates a number of atoms constituting a ring itself of a compound having a structure in which the atoms are bonded in a ring form. An atom not constituting the ring (for example, a hydrogen atom terminating a bond of the atoms constituting the ring), or the atom(s) contained in a substituent in the case where the foregoing ring is substituted with the substituent is not included in the ring atoms.

Examples of the substituent in the description of "substituted or unsubstituted" include an alkyl group having 1 or more and 10 or less (preferably 1 or more and 6 or less, more preferably 1 or more and 4 or less, and still more preferably 1 or more and 3 or less) carbon atoms; a cycloalkyl group having 3 or more and 10 or less (preferably 3 or more and 8 or less, more preferably 4 or more and 6 or less, and still more preferably 5 or 6) ring carbon atoms; an aryl group having 6 or more and 18 or less (preferably 6 or more and 12 or less) ring carbon atoms; a halogen atom (e.g., a fluorine atom, a chlorine atom, a bromine atom, and an iodine atom); a cyano group; a nitro group; a hydroxy group; and an amino group.

These substituents may be further substituted with the aforementioned arbitrary substituent.

A term "unsubstituted" in the description of "substituted or unsubstituted" means that the compound is not substituted with such a substituent, and the hydrogen atom is bonded thereto.

In this specification, with respect to a preferred numerical value range (for example, a content range), stepwise described lower limit value and upper limit value can be each independently combined. For example, from the description "preferably 10 or more, more preferably 30 or more, and still more preferably 40 or more, and preferably 90 or less, more preferably 80 or less, and still more preferably 70 or less", ranges combining a lower limit value and an upper limit value can be each independently selected as a preferred range, for example, "10 or more and 70 or less", "30 or more and 70 or less", or "40 or more and 80 or less". In addition, from the same description, a range merely limiting either a lower limit value or an upper limit value, for example, "40 or more" or "70 or less", can be selected, too. In addition, the same is also applicable to a selectable preferred range from the description "preferably 10 or more and 90 or less, more preferably 30 or more and 80 or less, and still more preferably 40 or more and 70 or more" or "preferably 10 to 90, more preferably 30 to 80, and still more preferably 40 to 70". It is to be noted that in this specification, regarding the description for a numerical value range, for example, the description "10 to 90" is synonymous with "10 or more and 90 or less".

Each of the components which are contained in the composition for refrigerator is hereunder described.

### <Mixed Refrigerant>

The mixed refrigerant contains the HFO in an amount of 52% by mass or more and 66% or less on a basis of the whole amount (100% by mass) of the mixed refrigerant. In the case where the content of the HFO is not satisfied, it is difficult to provide a composition for refrigerator capable of making both the favorable refrigerant dissolution properties and the favorable dissolution viscosity compatible with each other.

Accordingly, from the viewpoint of making both more favorable refrigerant dissolution properties and more favorable dissolution viscosity compatible with each other, the HFO content in the mixed refrigerant is 52% by mass or more, more preferably 54% by mass or more, and still more preferably 55% by mass or more, and it is 66% by mass or less, on a basis of the whole amount (100% by mass) of the mixed refrigerant.

The mixed refrigerant is hereunder described.

### (Unsaturated Fluorinated Hydrocarbon Compound (HFO))

Examples of the unsaturated fluorinated hydrocarbon compound (HFO) include compounds having a carbon-carbon double bond, such as fluorides of a linear or branched chain olefin having 2 or more and 6 or less carbon atoms; and a cyclic olefin having 4 or more and 6 or less carbon atoms.

More specifically, examples thereof include an ethylene having 1 or more and 3 or less (preferably 3) fluorine atoms introduced thereinto; a propene having 1 or more and 5 or less fluorine atoms introduced thereinto; a butene having 1 or more and 7 or less fluorine atoms introduced thereinto; a pentene having 1 or more and 9 or less fluorine atoms introduced thereinto; a hexene having 1 or more and 11 or less fluorine atoms introduced thereinto; a cyclobutene having 1 or more and 5 or less fluorine atoms introduced thereinto; a cyclopentene having 1 or more and 7 or less fluorine atoms introduced thereinto; and a cyclohexene having 1 or more and 9 or less fluorine atoms introduced thereinto.

Of these HFO's, a fluoride of a propene is preferred; a propene having 3 or more and 5 or less fluorine atoms introduced thereinto is more preferred; and a propene having 4 fluorine atoms introduced thereinto is still more preferred.

Suitable examples of the HFO include 1,2,3,3,3-pentafluoropropene (R1225ye), 2,3,3,3-tetrafluoropropene (R1234yf), 1,3,3,3-tetrafluoropropene (R1234ze), 1,2,3,3-tetrafluoropropene (R1234yz), 1,1,2-trifluoroethylene (R1123), and (Z)-1,1,1,4,4,4-hexafluoro-2-butene (R1336mzz(Z)). Of these HFO's, at least one selected from the group consisting of R1234yf, R1234ze, R1123, and R1336mzz(Z) is preferred; at least one selected from the group consisting of R1234yf, R1234ze, and R1336mzz(Z) is more preferred; at least one selected from the group consisting of R1234yf and R1234ze is still more preferred; and R1234yf is yet still more preferred.

These HFO's may be used alone or may be used in combination of two or more thereof. Here, in the case of using a combination of two or more HFO's, examples thereof include a combination of R1234yf and R1234ze.

In the HFO which the mixed refrigerant contains, the content of the fluoride of a propene is preferably 50% by mass or more and 100% by mass or less, more preferably 70% by mass or more and 100% by mass or less, still more preferably 90% by mass or more and 100% by mass or less, and yet still more preferably 100% by mass on a basis of the whole amount (100% by mass) of the HFO.

It is preferred to include R1234yf as the HFO which the mixed refrigerant contains. The content of R1234yf in the HFO which the mixed refrigerant contains is preferably 50% by mass or more and 100% by mass or less, more preferably 70% by mass or more and 100% by mass or less, still more preferably 90% by mass or more and 100% by mass or less, and yet still more preferably 100% by mass on a basis of the whole amount (100% by mass) of the HFO.

### (Saturated Fluorinated Hydrocarbon Compound (HFC))

The saturated fluorinated hydrocarbon compound (HFC) is preferably a fluoride of an alkane having 1 or more and 4 or less carbon atoms, more preferably a fluoride of an alkane having 1 or more and 3 or less carbon atoms, and still more preferably a fluoride of an alkane having 1 or 2 carbon atoms (methane or ethane). Examples of the fluoride of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125). Of these HFC's, R134a, is applied in the composition for refrigerator.

From the viewpoint of making both the favorable refrigerant dissolution properties and the favorable dissolution viscosity readily compatible with each other, the content of the HFC in the mixed refrigerant is 10% by mass or more and 48% by mass or less, more preferably 20% by mass or more and 48% by mass or less, still more preferably 30% by mass or more and 46% by mass or less, and yet still more preferably 33% by mass or more and 45% by mass or less on a basis of the whole amount (100% by mass) of the mixed refrigerant.

The mixed refrigerant may also be one further containing other refrigerant in addition to the aforementioned HFO and HFC. As the foregoing other refrigerant, a natural refrigerant is preferably exemplified.

### (Natural Refrigerant)

As the natural refrigerant, at least one selected from the group consisting of a hydrocarbon-based refrigerant (HC), carbon dioxide (CO₂ or carbonic acid gas), and ammonia is exemplified. These natural refrigerants may be used alone or may be used in combination of two or more thereof.

The hydrocarbon-based refrigerant is preferably a hydrocarbon having 1 or more and 8 or less carbon atoms, more preferably a hydrocarbon having 1 or more and 5 or less carbon atoms, and still more preferably a hydrocarbon having 3 or more and 5 or less carbon atoms. When the carbon number is 8 or less, the boiling point of the refrigerant does not become excessively high, and hence, such is preferred as the refrigerant. As the hydrocarbon-based refrigerant, at least one selected from the group consisting of methane, ethane, ethylene, propane (R290), cyclopropane, propylene, n-butane, isobutane (R600a), 2-methylbutane, n-pentane, isopentane, cyclopentaneisobutane, and n-butane is exemplified, and these may be used alone or may be used in combination of two or more thereof.

As an embodiment of the mixed refrigerant, a mixed refrigerant containing R1234yf as the HFO in an amount of 52% by mass or more and 66% by mass or less on a basis of the whole amount of the mixed refrigerant and R134a as the HFC is preferred;

In the case where the mixed refrigerant is an embodiment of a mixed refrigerant including R1234yf as the HFO in an amount of 52% by mass or more and 66% by mass or less on a basis of the whole amount of the mixed refrigerant and containing only R134a as the HFC, from the viewpoint of making both the favorable refrigerant dissolution properties and the favorable dissolution viscosity readily compatible with each other, the content of the R1234yf and the content of the R134a are preferably the following ranges, respectively. In the case of the foregoing embodiment, from the aforementioned viewpoint, the content of the R1234yf is 52% by mass or more, more preferably 54% by mass or more, and still more preferably 55% by mass or more, and it is 66% by mass or less, more preferably 62% by mass or less, and still more preferably 58% by mass or less on a basis of the whole amount (100% by mass) of the mixed refrigerant.

In the case of the foregoing embodiment, from the same viewpoint as mentioned above, the content of the R134a is preferably 30% by mass or more and 48% by mass or less, more preferably 34% by mass or more and 48% by mass or less, still more preferably 38% by mass or more and 46% by mass or less, and yet still more preferably 42% by mass or more and 45% by mass or less on a basis of the whole amount (100% by mass) of the mixed refrigerant.

The a mixed refrigerant is composed of the HFO in an amount of 52% by mass or more and 66% by mass or less on a basis of the whole amount of the mixed refrigerant and the HFC in an amount of 10% by mass or more and 48% by mass or less on a basis of the whole amount of the mixed refrigerant

With respect to the HFO and the HFC described as the combination of the respective refrigerants in the foregoing embodiment, the suitable embodiments and suitable contents of the HFO and the HFC are the same as those of the suitable embodiments and suitable contents of the HFO and the HFC in the aforementioned mixed refrigerant.

### [Refrigerator Oil]

The refrigerator oil contains a base oil (P) including PVE.

From the viewpoint of making the refrigerant dissolution properties more favorable, the content of the base oil (P) is preferably 90% by mass or more and 100% by mass or less, more preferably 95% by mass or more and 100% by mass or less, still more preferably 97% by mass or more and 100% by mass or less, and yet still more preferably 98% by mass or more and 100% by mass or less relative to the whole amount of 100% by mass of the refrigerator oil.

### <Base Oil (P)>

The base oil (P) which the refrigerator oil contains is a base oil including PVE.

From the viewpoint of making the refrigerant dissolution properties more favorable, the content of PVE is 90% by mass or more and 100% by mass or less, more preferably 95% by mass or more and 100% by mass or less, still more preferably 98% by mass or more and 100% by mass or less, and yet still more preferably 100% by mass relative to the whole amount of 100% by mass of the base oil (P).

### (Polyvinyl Ether (PVE))

Examples of the polyvinyl ether (PVE) include polymers having at least one structural unit derived from a vinyl ether. The base oil (P) may contain the PVE alone or may contain a combination of two or more thereof.

Of the foregoing PVE's, from the viewpoint of refrigerant dissolution properties, polymers having at least one structural unit derived from a vinyl ether and having an alkyl group having 1 or more and 4 or less carbon atoms in a side chain thereof are preferred.

Of the PVE's, a polymer (A1) having at least one structural unit represented by the following general formula (A-1) is preferred.

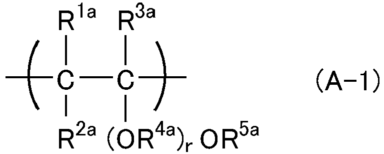

In the general formula (A-1), R^{1a}, R^{2a}, and R3a each independently represent a hydrogen atom or a hydrocarbon group having 1 or more and 8 or less carbon atoms; R^{4a} represents a divalent hydrocarbon group having 2 or more and 10 or less carbon atoms; and R^{5a} represents a hydrocarbon group having 1 or more and 10 or less carbon atoms.

In the general formula (A-1), r is a mean value of the number of units represented by OR^{4a} and represents a number of 0 or more and 10 or less, and it is preferably a number of 0 or more and 5 or less, more preferably a number of 0 or more and 3 or less, and still more preferably 0.

In the general formula (A-1), in the case where plural OR^{4a}'s exist (namely, in the case where r is a number of 2 or more), the plural OR^{4a}'s may be the same as or different from each other.

In the case where r is 0, the bond between the carbon atom (C) and -OR^{5a} in the general formula (A-1) is a single bond, and the carbon atom (C) bonds directly to -OR^{5a}.

Examples of the hydrocarbon group having 1 or more and 8 or less carbon atoms, which may be selected for R^{1a}, R^{2a}, and R^{3a}, include alkyl groups, such as a methyl group, an ethyl group, various propyl groups, various butyl groups, various pentyl groups, various hexyl groups, various heptyl groups, and various octyl groups; cycloalkyl groups, such as a cyclopentyl group, a cyclohexyl group, various methylcyclohexyl groups, various ethylcyclohexyl groups, and various dimethylcyclohexyl groups; aryl groups, such as a phenyl group, various methylphenyl groups, various ethylphenyl groups, and various dimethylphenyl groups; and arylalkyl groups, such as a benzyl group, various phenylethyl groups, and various methylbenzyl groups.

In this specification, the expression of "various XXX groups" is to include all isomers that are considered as the XXX groups. For example, a term "various alkyl groups" represents "linear, branched, or cyclic hydrocarbon groups". For example, a term "various propyl groups" represents various propyl groups, such as a n-propyl group and an isopropyl group; and a term "various butyl groups" represents various butyl groups, such as a n-butyl group, a sec-butyl group, an isobutyl group, a tert-butyl group, and a cyclobutyl group.

The carbon number of the hydrocarbon group which may be selected for R^{1a}, R^{2a}, and R^{3a} is preferably 1 or more and 6 or less, more preferably 1 or more and 4 or less, and still more preferably 1 or more and 3 or less.

R^{1a}, R^{2a}, and R^{3a} are each independently preferably a hydrogen atom or an alkyl group having 1 or more and 8 or less carbon atoms, more preferably a hydrogen atom or an alkyl group having 1 or more and 6 or less carbon atoms, still more preferably a hydrogen atom or an alkyl group having 1 or more and 4 or less carbon atoms, and yet still more preferably a hydrogen atom or an alkyl group having 1 or more and 3 or less carbon atoms.

R^{1a}, R^{2a}, and R^{3a} each may be the same as or different from each other.

Examples of the divalent hydrocarbon group having 2 or more and 10 or less carbon atoms, which may be selected for R^{4a}, include divalent aliphatic groups, such as an ethylene group, a 1,2-propylene group, a 1,3-propylene group, various butylene groups, various pentylene groups, various hexylene groups, various heptylene groups, various octylene groups, various nonylene groups, and various decylene groups; alicyclic groups that are a divalent residue of an alicyclic compound, such as cyclohexane, methylcyclohexane, ethylcyclohexane, dimethylcyclohexane, and propylcyclohexane; divalent aromatic groups, such as various phenylene groups, various methylphenylene groups, various ethylphenylene groups, various dimethylphenylene groups, and various naphthylene groups; divalent alkyl-aromatic groups having a monovalent bonding site in each of the alkyl group moiety and the aromatic moiety of an alkyl-aromatic hydrocarbon, such as toluene, xylene, and ethylbenzene; and divalent alkyl-aromatic groups having a bonding site in the alkyl group moiety of a polyalkyl-aromatic hydrocarbon, such as xylene and diethylbenzene.

The carbon number of the hydrocarbon group which may be selected for R^{4a} is preferably 2 or more and 8 or less, more preferably 2 or more and 6 or less, and still more preferably 2 or more and 4 or less.

R^{4a} is preferably a divalent aliphatic group having 2 or more and 10 or less carbon atoms, preferably a divalent aliphatic group having 2 or more and 6 or less carbon atoms, and still more preferably a divalent aliphatic group having 2 or more and 4 or less carbon atoms.

Examples of the hydrocarbon group having 1 or more and 10 or less carbon atoms, which may be selected for R^{5a}, include alkyl groups, such as a methyl group, an ethyl group, various propyl groups, various butyl, various pentyl groups, various hexyl groups, various heptyl groups, various octyl groups, various nonyl groups, and various decyl groups; cycloalkyl groups, such as a cyclopentyl group, a cyclohexyl group, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups, such as a benzyl group, various phenylethyl groups, various methylbenzyl groups, various phenylpropyl groups, and various phenylbutyl groups.

The carbon number of the hydrocarbon group which may be selected for R^{5a} is preferably 1 or more and 8 or less, and more preferably 1 or more and 6 or less.

From the viewpoint of more improving the refrigerant dissolution properties, R^{5a} is preferably an alkyl group having 1 or more and 6 or less carbon atoms, more preferably an alkyl group having 1 or more and 4 or less carbon atoms, and still more preferably a methyl group or an ethyl group.

In an embodiment of the present invention, preferably, the polymer (A1) has a structural unit (α1) wherein R^{5a} is an ethyl group.

From the viewpoint of more improving the refrigerant dissolution properties, the content of the structural unit (α1) is preferably 70% by mass or more and 100% by mass or less, more preferably 80% by mass or more and 100% by mass or less, still more preferably 90% by mass or more and 100% by mass or less, yet still more preferably 95% by mass or more and 100% by mass or less, and even yet still more preferably 99% by mass or more and 100% by mass or less on a basis of the whole amount (100% by mass) of structural units excluding a terminal structural unit which the polymer (A1) has.

Preferably, in the polymer (A1), the number of units of the structural unit (polymerization degree) represented by the general formula (A-1) is appropriately set so as to belong to a number average molecular weight range as mentioned later.

The polymer (A1) may be a homopolymer having only one kind of the structural unit represented by the general formula (A-1), or may be a copolymer having two or more kinds of the structural units.

The copolymerization morphology of the copolymer is not particularly restricted and may be a block copolymer, may be a random copolymer, or may be a graft copolymer.

Into the terminal part of the polymer (A1), a monovalent group derived from saturated hydrocarbons, ethers, alcohols, ketones, amides, nitriles, and the like may be introduced.

In an embodiment of the present invention, one terminal of the polymer (A1) is preferably a group represented by the following general formula (A-1-i):

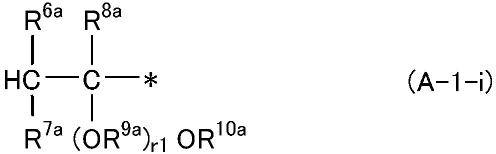

In the general formula (A-1-i), * indicates the bonding position to the carbon atom in the structural unit represented by the general formula (A-1).

In the general formula (A-1-i), R^{6a}, R^{7a}, and R^{8a} each independently represent a hydrogen atom or a hydrocarbon group having 1 or more and 8 or less carbon atoms, preferably a hydrogen atom or a hydrocarbon group having 1 or more and 6 or less carbon atoms, more preferably a hydrogen atom or an alkyl group having 1 or more and 6 or less carbon atoms, and still more preferably a hydrogen atom or an alkyl group having 1 or more and 3 or less carbon atoms.

R^{6a}, R^{7a}, and R^{8a} each may be the same as or different from each other.

As the hydrocarbon group having 1 or more and 8 or less carbon atoms, which may be selected for R^{6a}, R^{7a}, and R^{8a}, there are exemplified the same ones as those enumerated as the hydrocarbon group having 1 or more and 8 or less carbon atoms, which may be selected for R^{1a}, R^{2a}, and R^{3a} in the general formula (A-1).

In the general formula (A-1-i), R^{9a} represents a divalent hydrocarbon group having 2 or more and 10 or less carbon atoms, and it is preferably a divalent hydrocarbon group having 2 or more and 8 or less carbon atoms, more preferably a divalent hydrocarbon group having 2 or more and 6 or less carbon atoms, and still more preferably a divalent aliphatic group having 2 or more and 4 or less carbon atoms.

In the general formula (A-1-i), r1 is a mean value of the number of units represented by OR^{9a} and represents a number of 0 or more and 10 or less, and it is preferably a number of 0 or more and 5 or less, more preferably a number of 0 or more and 3 or less, and still more preferably 0.

In the general formula (A-1-i), in the case where plural OR^{9a}'s exist (namely, in the case where r1 is a number of 2 or more), the plural OR^{9a}'s may be the same as or different from each other.

In the case where r1 is 0, the bond between the carbon atom (C) and -OR^{10a} in the general formula (A-1-i) is a single bond, and the carbon atom (C) bonds directly to -OR^{10a}.

As the divalent hydrocarbon group having 2 or more and 10 or less carbon atoms, which may be selected for R^{9a}, there are exemplified the same ones as those enumerated as the divalent hydrocarbon group having 2 or more and 10 or less carbon atoms, which may be selected for R^{4a} in the general formula (A-1).

In the general formula (A-1-i), R^{10a} represents a hydrocarbon group having 1 or more and 10 or less carbon atoms, and it is preferably a hydrocarbon group having 1 or more and 8 or less carbon atoms, and more preferably an alkyl group having 1 or more and 8 or less carbon atoms.

In the case where r1 in the general formula (A-1-i) is 0, R^{10a} is still more preferably an alkyl group having 1 or more and 6 or less carbon atoms, and in the case where r1 is 1 or more, R^{10a} is still more preferably an alkyl group having 1 or more and 4 or less carbon atoms.

As the hydrocarbon group having 1 or more and 10 or less carbon atoms, which may be selected for R^{10a}, there are exemplified the same ones as those enumerated as the hydrocarbon group having 1 or more and 10 or less carbon atoms, which may be selected for R^{5a} in the general formula (A-1).

Preferably, in the polymer (A1), one terminal is the group represented by the general formula (A-1-i), and the other terminal is one selected from the group consisting of the group represented by the general formula (A-1-i), a group represented by the following general formula (A-1-ii), a group represented by the following general formula (A-1-iii), and a group having an olefinic unsaturated bond.

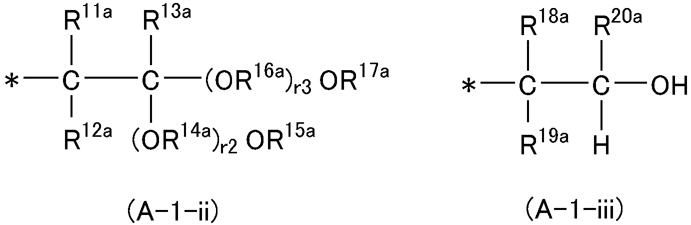

In the general formulae (A-1-ii) and (A-1-iii), R^{11a}, R^{12a}, R^{13a}, R^{18a}, R^{19a}, and R^{20a} each independently represent a hydrogen atom or a hydrocarbon group having 1 or more and 8 or less carbon atoms, preferably a hydrogen atom or a hydrocarbon group having 1 or more and 6 or less carbon atoms, more preferably a hydrogen atom or an alkyl group having 1 or more and 6 or less carbon atoms, and still more preferably a hydrogen atom or an alkyl group having 1 or more and 3 or less carbon atoms. R^{11a}, R^{12a}, R^{13a}, R^{18a}, R^{19a}, and R^{20a} each may be the same as or different from each other.

As the hydrocarbon group which may be selected for R^{11a}, R^{12a}, R^{13a}, R^{18a}, R^{19a}, and R^{20a}, there are exemplified the same ones as those enumerated as the hydrocarbon group having 1 or more and 8 or less carbon atoms, which may be selected for R^{1a}, R^{2a}, and R^{3a} in the general formula (A-1).

In the general formula (A-1-ii), R^{14a} and R^{16a} each independently represent a divalent hydrocarbon group having 2 or more and 10 or less carbon atoms, preferably a divalent hydrocarbon group having 2 or more and 6 or less carbon atoms, and more preferably a divalent aliphatic group having 2 or more and 4 or less carbon atoms. As the divalent hydrocarbon group which may be selected for R^{14a} and R^{16a}, there are exemplified the same ones as those enumerated as the divalent hydrocarbon group, which may be selected for R^{4a} in the general formula (A-1).

In the general formula (A-1-ii), r2 and r3 are each a mean value of the number of units represented by OR^{14a} and OR^{16a} and each independently represent a number of 0 or more and 10 or less, and they are each preferably a number of 0 or more and 5 or less, more preferably a number of 0 or more and 3 or less, and still more preferably 0.

In the general formula (A-1-ii), in the case where plural OR^{14a}'s and OR^{16a}'s exist, the plural OR^{14a}'s and the plural OR^{16a}'s each may be the same as or different from each other.

In the case where r2 is 0, the bond between the carbon atom (C) and -OR^{15a} in the general formula (A-1-ii) is a single bond, and the carbon atom (C) bonds directly to -OR^{15a}. Similarly, in the case where r3 is 0, the bond between the carbon atom (C) and -OR^{17a} in the general formula (A-1-ii) is a single bond, and the carbon atom (C) bonds directly to -OR^{17a}.

In the general formula (A-1-ii), R^{15a} and R^{17a} each independently represent a hydrocarbon group having 1 or more and 10 or less carbon atoms, preferably a hydrocarbon group having 1 or more and 8 or less carbon atoms, and more preferably an alkyl group having 1 or more and 8 or less carbon atoms.

In the case where r2 is 0, R^{15a} is still more preferably an alkyl group having 1 or more and 6 or less carbon atoms, and in the case where r2 is 1 or more, R^{15a} is still more preferably an alkyl group having 1 or more and 4 or less carbon atoms. Similarly, in the case where r3 is 0, R^{17a} is still more preferably an alkyl group having 1 or more and 6 or less carbon atoms, and in the case where r3 is 1 or more, R^{17a} is still more preferably an alkyl group having 1 or more and 4 or less carbon atoms.

A number average molecular weight (Mn) of the PVE is preferably 300 or more and 3,000 or less.

When the number average molecular weight (Mn) is 300 or more, the lubricity and the sealing performance become favorable. On the other hand, when the number average molecular weight (Mn) is 3,000 or less, the compatibility with the mixed refrigerant becomes favorable.

From the foregoing viewpoint, the number average molecular weight (Mn) of the PVE is more preferably 350 or more, and still more preferably 400 or more, and it is more preferably 2,800 or less, and still more preferably 2,500 or less.

The number average molecular weight (Mn) is a value measured by the method described in the section of Examples as mentioned later.

### (Other Base Oil)

The base oil (P) may further contain other base oil in addition to the PVE within a range where the effects of the present invention are not impaired.

Examples of the other base oil include at least one synthetic oil selected from the group consisting of a polyalkylene glycol (hereinafter also referred to as "PAG") and a polyol ester (hereinafter also referred to as "POE"); a synthetic oil (exclusive of the aforementioned PVE, PAG, and POE), such as a polyester, a polycarbonate, an α-olefin oligomer hydride, an alicyclic hydrocarbon compound, and an alkylated aromatic hydrocarbon compound; and a mineral oil.

Examples of the PAG include a compound (B1) represented by the general formula (B-1).

R^{1b}-[(OR^{2b})ₘ-OR^{3b}]ₙ (B-1)

In the general formula (B-1), R^{1b} represents a hydrogen atom, a monovalent hydrocarbon group having 1 or more and 10 or less carbon atoms, an acyl group having 2 or more and 10 or less carbon atoms, a hydrocarbon group having a valence of 2 or more and 6 or less and having 1 or more and 10 or less carbon atoms, or a substituted or unsubstituted heterocyclic group having 3 or more and 10 or less ring atoms.

R^{2b} represents an alkylene group having 2 or more and 4 or less carbon atoms.

R^{3b} represents a hydrogen atom, a monovalent hydrocarbon group having 1 or more and 10 or less carbon atoms, an acyl group having 2 or more and 10 or less carbon atoms, or a substituted or unsubstituted heterocyclic group having 3 or more and 10 or less ring atoms.

n is an integer of 1 or more and 6 or less, and it is defined in accordance with the number of bonding sites of R^{1b} in the general formula (B-1). For example, in the case where R^{1b} is an alkyl group or an acyl group, n is 1, and in the case where R^{1b} is a hydrocarbon group or a heterocyclic group, and the valence of the foregoing group is 2, 3, 4, 5, or 6, n is 2, 3, 4, 5, or 6, respectively.

m is a mean value of the number of units represented by OR^{2b} and represents a number of 1 or more, and it is preferably a number to make the mean value of (m × n) fall within a range of 6 or more and 80 or less. The value of m is a value which is appropriately set, and it is not particularly restricted so long as the effects of the present invention are brought, and it is preferably a number such that the mean value of (m × n) satisfies the aforementioned range.

In the case where plural OR^{2b}'s exist, the plural OR^{2b}'s may be the same as or different from each other. In addition, in the case where n is 2 or more, plural R^{3b}'s in one molecule may be the same as or different from each other.

Examples of the POE include esters of a diol or a polyol with a fatty acid.

Of the foregoing POE's, an ester of a diol or a polyol having 3 or more and 20 or less hydroxy groups and a fatty acid having 3 or more and 20 or less carbon atoms is exemplified.

The carbon number of the fatty acid also includes the carbon atom of the carboxy group (-COOH) which the fatty acid has. In addition, the fatty acid may be a linear fatty acid or may be a branched fatty acid. Furthermore, the fatty acid may be a saturated fatty acid or may be an unsaturated fatty acid.

The POE may be a partial ester in which all hydroxy groups of a polyol are not esterified but remain as such, or a complete ester in which all hydroxy groups are esterified; or may also be a mixture of the foregoing partial ester and the foregoing complete ester.

As an embodiment of the POE, the POE may also be an ester of a polyol with a mixture of two or more fatty acids.

As examples of the mixture of two or more fatty acids, a mixed fatty acid of a combination of two or more fatty acids selected from the group consisting of fatty acids having 4 or more and 9 or less carbon atoms is preferred.

In the case of an ester with two or more fatty acids, the ester may be a mixture of two or more esters of one fatty acid and a polyol.

Examples of the mineral oil include refined oils obtained by subjecting lubricating oil fractions obtained by vacuum-distilling an atmospheric residual oil which is obtained by atmospherically distilling a crude oil, such as a paraffinic crude oil, an intermediate base crude oil, and a naphthenic crude oil, to at least one of solvent deasphaltation, solvent extraction, hydrocracking, solvent dewaxing, catalytic dewaxing, and hydrorefining; oils produced by isomerizing a mineral oil-based wax; and oils produced by isomerizing GTL WAX (gas-to-liquid wax) which is produced by the Fischer-Tropsch process, or the like.

The synthetic oil and the mineral oil which can be used as the aforementioned other base oil may be used either alone or in combination of two or more thereof.

In the case where the base oil (P) contains the aforementioned other base oil, from the viewpoint of the refrigerant dissolution properties, the content of the other base oil is preferably more than 0% by mass and 10% by mass or less, more preferably more than 0% by mass and 5% by mass or less, and still more preferably more than 0% by mass and 2% by mass or less relative to the whole amount of 100% by mass of the base oil (P).

In the refrigerator oil, the content of the base oil (P) is preferably 90% by mass or more and 100% by mass or less, more preferably 95% by mass or more and 100% by mass or less, and still more preferably 97% by mass or more and 100% by mass or less on a basis of the whole amount (100% by mass) of the refrigerator oil.

### (Properties of Base Oil (P))

The kinematic viscosity of the base oil (P) at 40°C (hereinafter also referred to as "40°C kinematic viscosity") is preferably 20 mm²/s or more 150 mm²/s or less.

When the foregoing kinematic viscosity is 20 mm²/s or more, the lubricity and the sealing performance become favorable. On the other hand, when the kinematic viscosity is 150 mm²/s or less, the energy saving of the resulting composition for refrigerator becomes favorable.

From such viewpoint, the 40°C kinematic viscosity of the base oil (P) is more preferably 25 mm²/s or more, and still more preferably 30 mm²/s or more, and it is more preferably 100 mm²/s or less, and still more preferably 80 mm²/s or less.

The 40°C kinematic viscosity of the base oil (P) is a value measured by the method described in the section of Examples as mentioned later.

The hydroxy value of the base oil (P) is 15 mgKOH/g or less.

When the hydroxy value of the base oil (P) is 15 mgKOH/g or less, the refrigerant dissolution properties become favorable, and hence, such is preferred.

From such viewpoint, the hydroxy value of the base oil (P) is more preferably 10 mgKOH/g or less, still more preferably 5 mgKOH/g or less, and yet still more preferably 3 mgKOH/g or less.

The hydroxy value of the base oil (P) is a value measured by the method described in the section of Examples as mentioned later.

On the occasion of synthesizing various base oils, the hydroxy value of the base oil (P) can be, for example, regulated by adjusting the charged amounts of the raw materials and/or a condition of hydrogenation treatment after the polymerization.

From the viewpoint of safety, the flash point of the base oil (P) is preferably 160°C or higher. From the same viewpoint, the flash point of the base oil (P) is more preferably 170°C or higher, and still more preferably 175°C or higher.

Although an upper limit of the flash point of the base oil (P) is not particularly restricted, it is, for example, 300°C or lower.

The flash point of the base oil (P) is a value measured by the method described in the section of Examples as mentioned later.

The acid number of the base oil (P) is preferably 0.05 mgKOH/g or less, and more preferably 0.03 mgKOH/g or less.

From the viewpoint of improvements in thermal stability, hydrolysis stability, and electric insulation, the moisture content of the base oil (P) is preferably 500 ppm by mass or less, more preferably 400 ppm by mass or less, and still more preferably 300 ppm or less.

The acid number and the moisture content of the base oil (P) are values measured by the methods described in the section of Examples as mentioned later, respectively.

### <Other Additives>

The refrigerator oil may contain, in addition to the base oil (P), various additives (hereinafter also referred to as "other additives") which a refrigerator oil may contain. As the other additives, at least one additive selected from the group consisting of an antioxidant, an oiliness improver, an extreme pressure agent, an acid scavenger, an oxygen scavenger, a metal deactivator, a rust inhibitor, and an anti-foaming agent is exemplified.

In the case where the refrigerator oil contains the foregoing other additives, from the standpoints of effects, economy, and so on, the total content of the foregoing other additives is preferably 0.1% by mass or more, more preferably 0.2% by mass or more, and still more preferably 0.3% by mass or more, and it is preferably 10% by mass or less, more preferably 5% by mass or less, still more preferably 3% by mass or less, and yet still more preferably 2% by mass or less, on a basis of the whole amount (100% by mass) of the refrigerator oil.

However, the refrigerator oil may not contain the foregoing other additives.

Examples of the antioxidant include a phenol-based antioxidant and an amine-based antioxidant.

Examples of the phenol-based antioxidant include a monophenol-based antioxidant and a polyphenol-based antioxidant.

Examples of the monophenol-based antioxidant include alkyl-3-(3,5-di-tert-butyl-4-hydroxyphenyl)propionates (examples of the alkyl group include those having 4 or more and 20 or less carbon atoms, and preferably 8 or more and 18 or less carbon atoms), such as n-octyl-3-(3,5-di-tert-butyl-4-hydroxyphenyl)propionate, 6-methylheptyl-3-(3,5-di-tert-butyl-4-hydroxyphenyl)propionate, and n-octadecyl-3-(3,5-di-tert-butyl-4-hydroxyphenyl)propionate; 2,6-di-tert-butyl-4-alkylphenols (the alkyl group has 1 or more and 4 or less carbon atoms), such as 2,6-di-tert-butyl-4-methylphenol and 2,6-di-tert-butyl-4-ethylphenol; 2,4-dimethyl-6-tert-butylphenol, and 2,6-di-tert-amyl-p-cresol.

Examples of the polyphenol-based antioxidant include
4,4'-methylenebis(2,6-di-tert-butylphenol), 4,4'-bis(2,6-di-tert-butylphenol),
4,4'-bis(2-methyl-6-tert-butylphenol),
2,2' -methylenebis(4-ethyl-6-tert- bu tylphenol),
2,2'-methylenebis(4-methyl-6-tert-butylphenol),
4,4'-butylidenebis(3-methyl-6-tert-butylphenol),
4,4'-isopropylidenebis(2,6-di-tert-butylphenol),
2,2'-methylenebis(4-methyl-6-nonylphenol),
2,2'-isobutylidenebis(4,6-dimethylphenol),
2,2'-methylenebis(4-methyl-6-cyclohexylphenol),
4,4'-thiobis(2-methyl-6-tert-butylphenol),
4,4'-thiobis(3-methyl-6-tert-butylphenol),
2,2'-thiobis(4-methyl-6-tert-butylphenol),
bis(3-methyl-4-hydroxy-5-tert-butylbenzyl)sulfide,
bis(3,5-di-tert-butyl-4-hydroxybenzyl)sulfide, and
thiodiethylenebis[3-(3,5-di-tert-butyl-4-hydroxyphenyl)propionate].

Examples of the amine-based antioxidant include dialkyl diphenylamines, such as 4,4'-dibutyl diphenylamine and 4,4'-dioctyl diphenylamine; phenyl-α-naphthylamines, such as an alkylphenyl-α-naphthylamine and phenyl-α-naphthylamine; and N,N'-diphenyl-p-phenylenediamine.

The refrigerator oil may contain the antioxidant alone or may contain a combination of two or more thereof.

In the case where the refrigerator oil contains the antioxidant, the content of the antioxidant is preferably 0.1% by mass or more, more preferably 0.2% by mass or more, and still more preferably 0.3% by mass or more on a basis of the whole amount (100% by mass) of the refrigerator oil from the viewpoints that an increase of the acid number of the resulting refrigerator oil is suppressed, and that oxidation stability at a high temperature is more easily improved. The foregoing content is preferably 5% by mass or less, more preferably 3% by mass or less, and still more preferably 1% by mass or less from the viewpoint of making it easy to exhibit an effect corresponding to the content.

Examples of the oiliness improver include aliphatic saturated or unsaturated monocarboxylic acids, such as stearic acid and oleic acid; polymerized fatty acids, such as a dimer acid and a hydrogenated dimer acid; hydroxy fatty acids, such as ricinoleic acid and 12-hydroxystearic acid; aliphatic saturated or unsaturated monoalcohols, such as lauryl alcohol and oleyl alcohol; aliphatic saturated or unsaturated monoamines, such as stearylamine and oleylamine; aliphatic saturated or unsaturated monocarboxylic acid amides, such as lauric acid amide and oleic acid amide; and partial esters between a polyhydric alcohol, such as glycerin and sorbitol, and an aliphatic saturated or unsaturated monocarboxylic acid.

The refrigerator oil may contain the oiliness improver alone or may contain a combination of two or more thereof.

In the case where the refrigerator oil contains the oiliness improver, the content of the oiliness improver is preferably 0.01% by mass or more, more preferably 0.05% by mass or more, and still more preferably 0.1% by mass or more, and it is preferably 10% by mass or less, more preferably 5% by mass or less, and still more preferably 2% by mass or less, on a basis of the whole amount (100% by mass) of the refrigerator oil.

Examples of the extreme pressure agent include a phosphorus-based extreme pressure agent. Examples of the phosphorus-based extreme pressure agent include a phosphoric acid ester, a phosphorous acid ester, an acidic phosphoric acid ester, an acidic phosphorous acid ester, and amine salts thereof.

Examples of the phosphoric acid ester include a triaryl phosphate, a trialkyl phosphate, a monoalkyl diaryl phosphate, a dialkyl monoaryl phosphate, and a trialkenyl phosphate. The "aryl" mentioned regarding the extreme pressure agent is a concept including not only a functional group composed of only an aromatic ring but also an alkylaryl and an arylalkyl.

Examples of the phosphoric acid ester include triaryl phosphates, such as triphenyl phosphate, tricresyl phosphate, benzyl diphenyl phosphate, cresyl diphenyl phosphate, dicresyl phenyl phosphate, propylphenyl diphenyl phosphate, dipropylphenyl phenyl phosphate, ethylphenyl diphenyl phosphate, diethylphenyl phenyl phosphate, triethylphenyl phosphate, tripropylphenyl phosphate, butylphenyl diphenyl phosphate, dibutylphenyl phenyl phosphate, and tributylphenyl phosphate; alkyl phosphates, such as tributyl phosphate, ethyldibutyl phosphate, trihexyl phosphate, tri(2-ethylhexyl) phosphate, tridecyl phosphate, trilauryl phosphate, trimyristyl phosphate, tripalmityl phosphate, and tristearyl phosphate; ethyl diphenyl phosphate, and trioleyl phosphate.

Examples of the acidic phosphoric acid ester include various alkyl acid phosphates and dialkyl acid phosphates.

Examples of the phosphorous acid ester include various trialkyl phosphites, triaryl phosphites, monoalkyl diaryl phosphites, dialkyl monoaryl phosphites, and trialkenyl phosphites.

Examples of the acidic phosphorous acid ester include various dialkyl hydrogen phosphites, dialkenyl hydrogen phosphites, and diaryl hydrogen phosphites.

The phosphorus-based extreme pressure agent may also be a sulfur atom-containing phosphoric acid ester, such as trithiophenyl phosphate, or the like. Examples of the amine salt include amine salts of an acidic phosphoric acid ester or an acidic phosphorous acid ester. The amine that forms the amine salt may be a primary, secondary, or tertiary amine.

The refrigerator oil may contain the extreme pressure agent alone or may contain a combination of two or more thereof.

In the case where the refrigerator oil contains the extreme pressure agent, the content of the extreme pressure agent is preferably 0.1% by mass or more, more preferably 0.3% by mass or more, and still more preferably 0.5% by mass or more, and it is preferably 5% by mass or less, more preferably 3% by mass or less, and still more preferably 2% by mass or less, on a basis of the whole amount (100% by mass) of the refrigerator oil.

Examples of the acid scavenger include an epoxy compound. Examples of the epoxy compound include a glycidyl ether compound, cyclohexene oxide, an α-olefin oxide, and epoxidized soybean oil. Of these, a glycidyl ether compound is preferred.

Examples of the glycidyl ether compound include an aliphatic monoalcohol having preferably 3 or more and 30 or less carbon atoms, more preferably 4 or more and 24 or less carbon atoms, and still more preferably 6 or more and 16 or less carbon atoms; an aliphatic polyhydric alcohol having 3 or more and 30 or less carbon atoms, more preferably 4 or more and 24 or less carbon atoms, and still more preferably 6 or more and 16 or less carbon atoms; and an aromatic compound-derived glycidyl ether containing 1 or more hydroxy groups. The aliphatic monoalcohol or the aliphatic polyhydric alcohol may be linear, branched, or cyclic, and it may also be saturated or unsaturated.

In the case of an aliphatic polyhydric alcohol, or in the case of an aromatic compound containing two or more hydroxy groups, it is preferred that all of the hydroxy groups are glycidyl-etherified from the viewpoint of stability of the refrigerator oil and suppression of an increase of the hydroxy value.

Examples of the glycidyl ether compound include phenyl glycidyl ether, an alkyl glycidyl ether, and an alkylene glycol glycidyl ether. Examples of the glycidyl ether compound include a glycidyl ether derived from a linear, branched, or cyclic saturated aliphatic monoalcohol having 6 or more and 16 or less carbon atoms (namely, an alkyl glycidyl ether in which an alkyl group thereof has 6 or more and 16 or less carbon atoms). Examples of such a glycidyl ether include 2-ethylhexyl glycidyl ether, isononyl glycidyl ether, decyl glycidyl ether, lauryl glycidyl ether, and myristyl glycidyl ether.

The refrigerator oil may contain the acid scavenger alone or may contain a combination of two or more thereof.

In the case where the refrigerator oil contains the acid scavenger, the content of the acid scavenger is preferably 0.1% by mass or more, more preferably 0.4% by mass or more, and still more preferably 0.8% by mass or more on a basis of the whole amount (100% by mass) of the refrigerator oil from the viewpoint of making it more easy to improve the oxidation stability at a high temperature. The foregoing content is preferably 10% by mass or less, more preferably 5% by mass or less, still more preferably 3% by mass or less, and yet still more preferably 2% by mass or less from the viewpoint of making it easy to exhibit an effect corresponding to the content.

Examples of the oxygen scavenger include sulfur-containing aromatic compounds, such as 4,4'-thiobis(3-methyl-6-tert-butylphenol), diphenyl sulfide, dioctyl diphenyl sulfide, a dialkyl diphenylene sulfide, benzothiophene, dibenzothiophene, phenothiazine, benzothiapyran, thiapyran, thianthrene, dibenzothiapyran, and diphenylene disulfide; aliphatic unsaturated compounds, such as various olefins, dienes, and trienes; and terpenes having a double bond.

The refrigerator oil may contain the oxygen scavenger alone or may contain a combination of two or more thereof.

In the case where the refrigerator oil contains the oxygen scavenger, the content of the oxygen scavenger is preferably 0.01% by mass or more, more preferably 0.05% by mass or more, and still more preferably 0.1% by mass or more, and it is preferably 10% by mass or less, more preferably 5% by mass or less, still more preferably 3% by mass or less, and yet still more preferably 2% by mass or less, on a basis of the whole amount (100% by mass) of the refrigerator oil.

Examples of the metal deactivator include copper deactivators, such as an N-[N,N'-dialkyl (alkyl group having 3 or more and 12 or less carbon atoms) aminomethyl]triazole.

Examples of the rust inhibitor include a metal sulfonate, an aliphatic amine, an organic phosphorous acid ester, an organic phosphoric acid ester, an organic sulfonic acid metal salt, an organic phosphoric acid metal salt, an alkenyl succinic acid ester, and a polyhydric alcohol ester.

Examples of the anti-foaming agent include silicone oils, such as dimethyl polysiloxane, and polymethacrylates.

The refrigerator oil may contain the metal deactivator, the rust inhibitor, or the anti-foaming agent, respectively alone or may contain a combination of two or more thereof.

In the case where the refrigerator oil contains the metal deactivator, the rust inhibitor, or the anti-foaming agent, the content of each of them is preferably 0.01% by mass or more, more preferably 0.05% by mass or more, and still more preferably 0.1% by mass or more, and it is preferably 10% by mass or less, more preferably 5% by mass or less, still more preferably 3% by mass or less, and yet still more preferably 2% by mass or less, on a basis of the whole amount (100% by mass) of the refrigerator oil.

### [Production Method of Refrigerator Oil]

The production method of the aforementioned refrigerator oil is a method of producing a refrigerator oil which is a refrigerator oil for the aforementioned mixed refrigerant and contains the base oil (P).

The foregoing production method is a production method of blending the base oil (P) to obtain a refrigerator oil, and in the foregoing production method, the aforementioned other additives may be blended in addition to the base oil (P).

Detailed explanations of the base oil (P) and the other additives are the same as those mentioned above, and hence, the explanations are omitted. In addition, the mixed refrigerant is also the same as that mentioned above.

A content ratio of the refrigerator oil and the mixed refrigerant [(refrigerator oil)/(mixed refrigerant)] at 60°C and 1.5 MPaG in the composition for refrigerator is preferably 30/70 or more and 85/15 or less, more preferably 31/69 or more and 82/18 or less, and still more preferably 32/68 or more and 80/20 or less in terms of a mass ratio. By allowing the foregoing mass ratio of the refrigerator oil and the mixed refrigerant to fall within the foregoing range, it is possible to obtain lubricity and suitable refrigerating capacity in a refrigerator.

The total content of the mixed refrigerant and the refrigerator oil in the composition for refrigerator is preferably 90% by mass or more and 100% by mass or less, more preferably 95% by mass or more and 100% by mass or less, still more preferably 98% by mass or more and 100% by mass or less, and yet still more preferably 100% by mass on a basis of the whole amount (100% by mass) of the composition for refrigerator.

### <Properties of Composition for Refrigerator>

The composition for refrigerator is favorable in the aforementioned refrigerant dissolution properties, and a refrigerant solubility thereof at 60°C and 1.5 MPaG is preferably 15% by mass or more and 70% by mass or less.

In this specification, the value of the refrigerant solubility refers to a rate (% by mass) at which the mixed refrigerant is dissolved in the refrigerator oil under the aforementioned condition, and specifically, it means a value measured by the same method as the method described in the section of Examples as mentioned later. Then, the value of the refrigerant solubility is an index of evaluating the aforementioned refrigerant dissolution properties.

What the value of the refrigerant solubility is 15% by mass or more is preferred from the viewpoint that on the occasion of using the composition for refrigerator, the function of the refrigerant is sufficiently exhibited. On the other hand, what the value of the refrigerant solubility is 70% by mass or less is preferred from the viewpoint that a lowering of the lubricity owing to a decrease of the dissolution viscosity to be caused due to the matter that the refrigerant is excessively dissolved can be suppressed, and is also preferred from the viewpoint that the matter that on the occasion of using the composition for refrigerator, the refrigerant is hardly vaporized, so that an effect corresponding to the use amount of the refrigerant is not obtained can be suppressed. From the same viewpoints, the refrigerant solubility is more preferably 18% by mass or more, and still more preferably 20% by mass or more, and it is more preferably 69% by mass or less, and still more preferably 68% by mass or less.

The composition for refrigerator is also favorable in the lubricity, and the dissolution viscosity of the composition for refrigerator at 60°C and 1.5 MPaG is preferably 0.6 mm²/s or more and 8 mm²/s or less.

What the value of the dissolution viscosity is 0.6 mm²/s or more is preferred from the viewpoint that favorable lubricity is obtained. On the other hand, what the value of the dissolution viscosity is 8 mm²/s or less is preferred from the viewpoint of energy saving, and is also preferred from the viewpoint that, for example, the fluidity at the time of passing through an expansion mechanism, such as a capillary, in a compression-type refrigerator is excellent. From the same viewpoints, the dissolution viscosity is more preferably 0.8 mm²/s or more, and more preferably 1.0 mm²/s or more, and it is more preferably 8.0 mm²/s or less, still more preferably 7.0 mm²/s or less, and yet still more preferably 6.0 mm²/s or less.

Preferably, the composition for refrigerator satisfies the both values of the refrigerant solubility and the dissolution viscosity. That is, it is preferred that the composition for refrigerator has not only the refrigerant solubility at 60°C and 1.5 MPaG of 15% by mass or more and 70% by mass or less but also the dissolution viscosity at 60°C and 1.5 MPaG of 0.6 mm²/s or more and 8 mm²/s or less.

In this case, the preferred ranges of the refrigerant solubility and the dissolution viscosity are independently the same as the aforementioned preferred ranges, respectively. For example, among the preferred ranges of the refrigerant solubility and the dissolution viscosity, a combination of one of the preferred ranges with the other of the more preferred range, or a reverse combination thereof may be adopted; a combination of one of the preferred ranges with the other of the still more preferred range, or a reverse combination thereof may be adopted; and a combination of the more preferred ranges with the other of the yet still more preferred range, or a reverse combination thereof may be adopted. However, as a matter of course, as compared with an embodiment in which the both properties satisfy the preferred ranges but do not satisfy the more preferred ranges, an embodiment in which the both properties satisfy the more preferred ranges is more preferred, and similarly, an embodiment in which the both properties satisfy the still more preferred ranges is still more preferred.

### [Production Method of Composition for Refrigerator]

The composition for refrigerator is obtained by mixing the aforementioned mixed refrigerant and the aforementioned refrigerator oil. That is, the production method of the composition for refrigerator according to an embodiment of the present invention is a method of producing a composition for refrigerator including a step of mixing the aforementioned mixed refrigerant and the aforementioned refrigerator oil.

Detailed explanations of the mixed refrigerant and the refrigerator oil are the same as those mentioned above, and hence, the explanations are omitted.

### [Refrigerator]

The aforementioned composition for refrigerator is one to be filled in the interior of the refrigerator and used.

The refrigerator is preferably a compression-type refrigerator using the aforementioned mixed refrigerant, and more preferably one having a refrigeration cycle including a compressor, a condenser, an expansion mechanism (e.g., an expansion valve), and an evaporator, or having a refrigeration cycle including a compressor, a condenser, an expansion mechanism, a dryer, and an evaporator.

The composition for refrigerator is, for example, used for lubricating a sliding portion to be provided in a compressor or the like. The sliding portion is not particularly limited.

All of the refrigerators are ones using the mixed refrigerant. Although the refrigerator is applied to, for example, a car air conditioner, such as an open-type car air conditioner and an electric car air conditioner, an air conditioner, such as a room air conditioner and a package air conditioner, a gas heat pump (GHP), a refrigeration system, such as a freezer, an icebox, a vending machine, and showcase, a hot water system, such as a water heater and a floor heater, and a heating system, it is preferably applied to an air conditioning application, and more preferably applied to a room air conditioner or a package air conditioner.

In the case where the aforementioned composition for refrigerator is filled in the interior of the refrigerator and used, a use amount ratio of the refrigerator oil and the mixed refrigerant [(refrigerator oil)/(mixed refrigerant)] is preferably 1/99 or more and 99/1 or less, more preferably 1/99 or more and 90/10 or less, and still more preferably 5/95 or more and 88/12 or less in terms of a mass ratio.

The use amount ratio is a use amount ratio of the mixed refrigerant and the refrigerator oil to be introduced into the interior of the apparatus, and it is based on each of the use amounts of the mixed refrigerant and the refrigerator oil on the occasion of introducing into the system to the bitter end, regardless of whether the both are compatibilized with each other completely or partially. That is, the use amount ratio does not refer to a ratio of each of the components in the composition for refrigerator.

### Examples

The present invention is hereunder more specifically described by reference to Examples, but it should be construed that the present invention is by no means limited by these Examples.

Respective physical properties of each component and each composition for refrigerator were determined in the following way.

### [40°C Kinematic Viscosity]

Measured in conformity with JIS K2283:2000.

### [Number Average Molecular Weight (Mn)]

Measured with a gel permeation chromatograph (GPC). As for the GPC, one having two columns of "TSKgel SuperMultipore HZ-M", manufactured by Tosoh Corporation successively connected to each other was used; tetrahydrofuran was used as an eluent; the measurement was performed by using a refractive index detector (RI detector) for a detector; and the number average molecular weight (Mn) was determined while using polystyrene as a standard sample.

### [Hydroxy Value]

Measured through the neutralization titration method in conformity with JIS K0070:1992.

### [Flash Point]

Measured in conformity with JIS K2265-4:2007 (Cleveland open-cup method).

### [Acid Number]

Measured through the indicator photometric titration method in conformity with JIS K2501 (see Appendix 1 of the foregoing JIS standards).

### [Moisture Content]

Measured through the Karl Fischer titration method in conformity with JIS K2275.

### [Refrigerant Solubility]

In a glass-made pressure-resistant vessel, predetermined amounts of a refrigerator oil and a mixed refrigerant were sealed, and the temperature of the vessel was raised from room temperature (23°C) to 60°C. A temperature/pressure/solubility curve was prepared through calculation from the volume of the refrigerator oil having the mixed refrigerant dissolved therein (composition for refrigerator) and the pressure at that time. The solubility (% by mass) of the mixed refrigerant relative to the refrigerator oil at 60°C and 1.5 MPaG was calculated from the prepared solubility curve.

### [Dissolution Viscosity]

The dissolution viscosity of the composition for refrigerator at 60°C and 1.5 MPaG was measured using a viscosity analyzer shown in Figs. 1 to 3 of JP 2007-108045 A in conformity with the measuring procedures described in paragraph [0020] of the foregoing patent document. However, the measurement was performed while changing the following points.

As the "liquid of lubricating oil" to be introduced into a vessel made of a sapphire tube, each refrigerator oil shown in the following Table 2 was used.

As the "refrigerant" to be introduced into a vessel made of a sapphire tube, each mixed refrigerant having a composition shown in the following Table 2 was used. Then, the mixed refrigerant was introduced into the aforementioned vessel such that the pressure at the time of measurement was 1.5 MPaG.

As for the vessel after introducing the refrigerator oil and the mixed refrigerant, in order to measure the desired dissolution viscosity, the setting temperature of a heating medium in a previously prepared thermostat was set to 60°C.

Physical properties of the base oil (P) contained in each of the compositions for refrigerator shown in Table 2 as evaluated in the respective Examples and respective Comparative Examples are shown in the following Table 1.

**Table 1**

| Base oil (P) | | 40°C kinematic viscosity (mm²/s) | Number average molecular weight (Mn) | Hydroxy value (mgKOH/g) | Flash point (°C) | Acid number (mgKOH/g) | Moisture content (ppm by mass) |
|---|---|---|---|---|---|---|---|
| PVE-1 | Polyethyl vinyl ether | 55.87 | 865 | 3 or less | 180 | 0.01 | 150 |
| PVE-2 | Polyethyl vinyl ether | 34.81 | 660 | 3 or less | 178 | 0.01 | 150 |

### [Examples 1 to 4 and Comparative Examples 1 to 3]

A composition for refrigerator in which the refrigerator oil containing 100% by mass of the base oil (P) shown in the aforementioned Table 1 and a mixed refrigerant having a composition shown in the following Table 2 were mixed in a composition shown in the following Table 2 was prepared and evaluated according to the aforementioned evaluation methods. The obtained results are shown in Table 2.

Examples 1 and 3 are not according the invention.

**Table 2**

| | | | Example 1 | Example 2 | Comparative Example 1 | Comparative Example 2 | Example 3 | Example 4 | Comparative Example 3 |
|---|---|---|---|---|---|---|---|---|---|
| Refrigerator oil * 1 | | | PVE-1 | | | | PVE-2 | | |
| Mixed refrigerant [% by mass] *2 | HFO | R1234yf | 65.0 | 56.0 | 40.0 | 100.0 | 65.0 | 56.0 | 100.0 |
| | HFC | R134a | - | 44.0 | - | - | - | 44.0 | - |
| | | R32 | 35.0 | - | 60.0 | - | 35.0 | - | - |
| | Total | | 100.0 | 100.0 | 100.0 | 100.0 | 100.0 | 100.0 | 100.0 |
| Refrigerant solubility [% by mass] | | | 22 | 62 | 12 | 70 | 37 | 66 | 74 |
| Dissolution viscosity [mm²/s] | | | 5.0 | 1.1 | 9.0 | 0.5 | 3.1 | 0.6 | 0.4 |

| | | | | | | | | | |
|---|---|---|---|---|---|---|---|---|---|
| *1: The base oil (P) is 100% by mass in the whole amount of the refrigerator oil. *2: The content in the whole amount of the mixed refrigerant | | | | | | | | | |

As shown in Table 2, as for the compositions for refrigerator of Examples 1 to 4 each including a mixed refrigerant including an unsaturated fluorinated hydrocarbon compound (HFO) in an amount of more than 50% by mass and 70% by mass or less on a basis of the whole amount of the mixed refrigerant and a saturated fluorinated hydrocarbon compound (HFC) and a refrigerator oil containing a base oil (P) including a polyvinyl ether (PVE), it was confirmed that the refrigerant solubility of the mixed refrigerant in the refrigerator oil falls within a favorable range as the composition for refrigerator, and the dissolution viscosity thereof exhibits a favorable range.

On the other hand, as for the compositions for refrigerator of Comparative Examples 1 to 3, in view of the fact that the HFO content in the mixed refrigerant is 50% by mass or less or more than 70% by mass, it was confirmed that the refrigerant solubility of the mixed refrigerant is low, or the refrigerant solubility becomes high, as compared with the composition for refrigerator of each of the Examples.

In addition, as for the composition for refrigerator of Comparative Example 1, the dissolution viscosity is higher than that of the composition for refrigerator of each of the Examples, so that it is presumed that the energy saving is inferior, whereas as for the compositions for refrigerator of Comparative Examples 2 and 3, the dissolution viscosity is low, so that it is presumed that the lubricity is inferior.

### Industrial Applicability

The composition for refrigerator as an embodiment of the present invention is made compatible in terms of both favorable refrigerant dissolution properties and the favorable dissolution viscosity with each other, so that it is suitable for refrigerator applications, and for example, it can be more suitably used as a composition for refrigerator to be used for a closed-type compression-type refrigerator using the mixed refrigerant. In addition, the aforementioned composition for refrigerator is one including the aforementioned mixed refrigerant, so that it can be, for example, suitably used for a car air conditioner, such as an open-type car air conditioner and an electric car air conditioner, an air conditioner, such as a room air conditioner and a package air conditioner, a gas heat pump (GHP), a refrigeration system, such as a freezer, an icebox, a vending machine, and showcase, a hot water system, such as a water heater and a floor heater, and a heating system.

## Claims

1. A composition for refrigerator comprising a mixed refrigerant and a refrigerator oil containing a base oil (P), wherein
the mixed refrigerant includes an unsaturated fluorinated hydrocarbon compound (HFO) in an amount of 52% by mass or more and 66% by mass or less on a basis of the whole amount of the mixed refrigerant and a saturated fluorinated hydrocarbon compound (HFC) wherein the saturated fluorinated hydrocarbon compound (HFC) is 1,1,1,2-tetrafluoroethane (R134a);
wherein the content of the saturated fluorinated hydrocarbon compound (HFC) in the mixed refrigerant is 10% by mass or more and 48% by mass or less on a basis of the whole amount of the mixed refrigerant;
wherein the base oil (P) includes a polyvinyl ether (PVE),
wherein the content of the polyvinyl ether (PVE) in the base oil (P) is 90% by mass or more and 100% by mass or less; and
wherein a hydroxy value of the base oil (P) is 15 mgKOH/g or less, measured through the neutralization titration method in conformity with JIS K0070:1992.

2. The composition for refrigerator according to claim 1, wherein a 40°C kinematic viscosity of the base oil (P) is 20 mm²/s or more and 150 mm²/s or less.

3. The composition for refrigerator according to any one of claims 1 to 2, wherein the unsaturated fluorinated hydrocarbon compound (HFO) includes 2,3,3,3-tefrafluoropropene (R1234yf).

4. The composition for refrigerator according to any one of claims 1 to 3, wherein the total content of the mixed refrigerant and the refrigerator oil in the composition for refrigerator is 90% by mass or more and 100% by mass or less.

5. The composition for refrigerator according to any one of claims 1 to 4, wherein a content ratio of the refrigerator oil and the mixed refrigerant at 60°C and 1.5 MPaG [(refrigerator oil)/(mixed refrigerant)] in the composition for refrigerator is 30/70 or more and 85/15 or less in terms of a mass ratio.

6. Use of the composition for refrigerator according to any one of claims 1 to 5 in a refrigerator, wherein the composition is filled in the interior of the refrigerator, and wherein the amount ratio of the refrigerator oil and the mixed refrigerant [(refrigerator oil)/(mixed refrigerant)] is 1/99 or more and 99/1 or less in terms of a mass ratio.

## Patentansprüche

1. Zusammensetzung für einen Kühlschrank, umfassend ein gemischtes Kältemittel und ein Kühlschranköl, das ein Grundöl (P) enthält, wobei
das gemischte Kältemittel eine ungesättigte fluorierte Kohlenwasserstoffverbindung (HFO) in einer Menge von 52 Massen-% oder mehr und 66 Massen-% oder weniger, bezogen auf die Gesamtmenge des gemischten Kältemittels, und eine gesättigte fluorierte Kohlenwasserstoffverbindung (HFC) umfasst, wobei die gesättigte fluorierte Kohlenwasserstoffverbindung (HFC) 1,1,1,2-Tetrafluorethan (R134a) ist;
wobei der Gehalt der gesättigten fluorierten Kohlenwasserstoffverbindung (HFC) in dem gemischten Kältemittel 10 Massen-% oder mehr und 48 Massen-% oder weniger, bezogen auf die Gesamtmenge des gemischten Kältemittels, beträgt;
wobei das Grundöl (P) einen Polyvinylether (PVE) einschließt,
wobei der Gehalt des Polyvinylethers (PVE) im Grundöl (P) 90 Massen-% oder mehr und 100 Massen-% oder weniger beträgt; und
wobei der Hydroxylwert des Grundöls (P) 15 mgKOH/g oder weniger beträgt, gemessen durch das Neutralisationstitrationsverfahren gemäß JIS K0070:1992.

2. Zusammensetzung für einen Kühlschrank gemäß Anspruch 1, wobei die kinematische Viskosität des Grundöls (P) bei 40°C 20 mm²/s oder mehr und 150 mm²/s oder weniger beträgt.

3. Zusammensetzung für einen Kühlschrank gemäß mindestens einem der Ansprüche 1 bis 2, wobei die ungesättigte fluorierte Kohlenwasserstoffverbindung (HFO) 2,3,3,3-Tetrafluorpropen (R1234yf) einschließt.

4. Zusammensetzung für einen Kühlschrank gemäß mindestens einem der Ansprüche 1 bis 3, wobei der Gesamtgehalt des gemischten Kältemittels und des Kühlschranköls in der Zusammensetzung für einen Kühlschrank 90 Massen-% oder mehr und 100 Massen-% oder weniger beträgt.

5. Zusammensetzung für einen Kühlschrank gemäß mindestens einem der Ansprüche 1 bis 4, wobei das Mengenverhältnis von dem Kühlschranköl und dem gemischten Kältemittel bei 60°C und 1,5 MPaG [(Kühlschranköl)/(gemischtes Kältemittel)] in der Zusammensetzung für einen Kühlschrank 30/70 oder mehr und 85/15 oder weniger in Bezug auf das Massenverhältnis beträgt.

6. Verwendung der Zusammensetzung für einen Kühlschrank gemäß mindestens einem der Ansprüche 1 bis 5 in einem Kühlschrank, wobei die Zusammensetzung in das Innere des Kühlschranks eingefüllt wird, und wobei das Mengenverhältnis von dem Kühlschranköl und dem gemischten Kältemittel [(Kühlschranköl)/(gemischtes Kältemittel)] 1/99 oder mehr und 99/1 oder weniger in Bezug auf das Massenverhältnis beträgt.

## Revendications

1. Composition pour réfrigérateur comprenant un réfrigérant mélangé et une huile de réfrigérateur contenant une huile de base (P), dans laquelle
le réfrigérant mélangé inclut un composé hydrocarboné fluoré insaturé (HFO), dans une quantité supérieure ou égale à 52 % en masse et inférieure ou égale à 66 % en masse sur la base de la quantité totale du réfrigérant mélangé, et un composé hydrocarboné fluoré saturé (HFC), dans laquelle le composé hydrocarboné fluoré saturé (HFC) est le 1,1,1,2-tétrafluoroéthane (R134a) ;
dans laquelle la teneur en composé hydrocarboné fluoré saturé (HFC) dans le réfrigérant mélangé est supérieure ou égale à 10 % en masse et inférieure ou égale à 48 % en masse sur la base de la quantité totale du réfrigérant mélangé ;
dans laquelle l'huile de base (P) inclut un éther de polyvinyle (PVE),
dans laquelle la teneur en éther de polyvinyle (PVE) dans l'huile de base (P) est supérieure ou égale à 90 % en masse et inférieure ou égale à 100 % en masse ; et
dans laquelle la valeur hydroxyle de l'huile de base (P) est inférieure ou égale à 15 mgKOH/g, mesurée par la méthode de titrage de neutralisation conformément à la norme JIS K0070:1992.

2. Composition pour réfrigérateur selon la revendication 1, dans laquelle une viscosité cinématique à 40°C de l'huile de base (P) est supérieure ou égale à 20 mm²/s et inférieure ou égale à 150 mm²/s.

3. Composition pour réfrigérateur selon l'une quelconque des revendications 1 à 2, dans laquelle le composé hydrocarboné fluoré insaturé (HFO) inclut le 2,3,3,3-téfrafluoropropène (R1234yf).

4. Composition pour réfrigérateur selon l'une quelconque des revendications 1 à 3, dans laquelle la teneur totale en réfrigérant mélangé et en huile de réfrigérateur dans la composition pour réfrigérateur est supérieure ou égale à 90 % en masse et inférieure ou égale à 100 % en masse.

5. Composition pour réfrigérateur selon l'une quelconque des revendications 1 à 4, dans laquelle un rapport de teneur entre l'huile de réfrigérateur et le réfrigérant mélangé à 60°C et 1,5 MPaG [(huile de réfrigérateur)/(réfrigérant mélangé)] dans la composition pour réfrigérateur est supérieur ou égal à 30/70 et inférieur ou égal à 85/15 en termes de rapport de masses.

6. Utilisation de la composition pour réfrigérateur selon l'une quelconque des revendications 1 à 5 dans un réfrigérateur, dans laquelle la composition est remplie à l'intérieur du réfrigérateur, et dans laquelle le rapport de quantité entre l'huile de réfrigérateur et le réfrigérant mélangé [(huile de réfrigérateur)/(réfrigérant mélangé)] est supérieur ou égal à 1/99 et inférieur ou égal à 99/1 en termes de rapport de masses,
